# EUROPÄISCHE PATENTSCHRIFT

(11) **EP 2 212 386 B1**
(45) Veröffentlichungstag und Bekanntmachung des Hinweises auf die Patenterteilung: **30.11.2011**
(21) Anmeldenummer: 08841544.3
(22) Anmeldetag: 24.09.2008
(51) Int. Cl.: C09B 67/22, C08K 5/3412

(54) **DIKETOPYRROLOPYRROL-MISCHKRISTALLE**
DIKETOPYRROLOPYRROLE COCRYSTALS
CRISTAUX MIXTES DE DICÉTOPYRROLOPYRROLE

(30) Priorität: 18.10.2007 DE 102007049883
(43) Veröffentlichungstag der Anmeldung: 04.08.2010
(73) Patentinhaber: Clariant Finance (BVI) Limited, Road Town, Tortola (VG)
(72) Erfinder: GANSCHOW, Matthias, 65195 Wiesbaden (DE); BENNER, Uwe, 65795 Hattersheim (DE); STEINHAUER, Sascha, 65618 Selters (DE)
(74) Vertreter: Hütter, Klaus
(86) Internationale Anmeldenummer: PCT/EP2008/008073
(87) Internationale Veröffentlichungsnummer: WO 2009/052917

(56) Entgegenhaltungen:
- EP-A- 0 704 497
- EP-A- 0 764 696
- EP-A- 0 794 235
- EP-A- 0 816 440
- US-A- 5 354 869

## Beschreibung

Die vorliegende Erfindung betrifft neue Diketopyrrolopyrrol-Mischkristalle

Diketopyrrolopyrrol-Pigmente zeichnen sich durch sehr hohe Echtheiten in Lacken und Kunststoffen aus. Das einzig im Handel erhältliche rubinrot-farbene Diketopyrrolopyrrol-Pigment ist das in der Herstellung sehr teure C.I. Pigment Red 264.

Die Aufgabe bestand nun darin, ein im Vergleich zum P.R. 264 preiswerteres rubinrot-farbenes Diketopyrrolopyrrol-Pigment mit hohen Echtheiten, hoher Farbtonreinheit und Brillanz zu finden.
Reines Bis(2-Chlor-Phenyl)-Diketopyrrolopyrrol (III) zeigt eine orange-farbene Coloristik und reines Bis(4-Chlor-Phenyl)-Diketopyrrolopyrrol ((I) mit X=Cl) hat eine gelbstichig-rote Coloristik

Aus der EP-A-0 094 911, der WO 2002/085 987 und der EP-A-0 181 290 sind DPP-Pigmentzusammensetzungen bekannt, die durch Mischsynthese aus zwei unterschiedlichen Nitrilen A und B und Bemsteinsäurediestem hergestellt werden. Mischsynthesen aus 2-Chlor- und 4-Chlorbenzonitrilen sind nicht beschrieben.

Aus EP-A-0 962 499 sind Pigmentzusammensetzungen aus Diketopyrrolopyrrolen (DPPs) bekannt, die durch Mischsynthese aus zwei unterschiedlichen Nitrilen A und B und Bemsteinsäurediestem in Gegenwart eines Kristallwachstumsinhibitors hergestellt werden. Mischsynthesen aus 2-Chlor- und 4-Chlorbenzonitrilen sind nicht beschrieben.

EP 0 794 235 A1 offenbart ternäre Mischkristalle von 1,4-Diketopyrrolo-pyrrolen und Chinacridonen oder einem dritten Diketopyrrolopyrrol.

US 5,354,869 offenbart 3,6-Bis-(2'-methoxyphenyl)-2,5-dihydro-2,5-dimethyl-pyrrolo-(3,4-c)-pyrrole-1,4-dion.

EP 0 764 696 A2 beschreibt ein Verfahren zur Herstellung von Mischkristallen aus zwei unterschiedlichen 1,4-Diketopyrrolopyrrolen.

EP 0 704 497 A1 beschreibt ebenfalls Mischkristalle aus zwei unterschiedlichen 1,4-Diketopyrrolopyrrolen.

EP 0 816 440 A1 erwähnt Pigmentpulvergemische, die auch Diketopyrrolopyrrolpigmente enthalten können.

Es wurde überraschend gefunden, dass ein Mischkristall mit einem bestimmten Mengenverhältnis von Bis(4-X-Phenyl)-Diketopyrrolopyrrol (I), (2-Chlor-Phenyl)-(4-X-Phenyl)-Diketopyrrolopyrrol (II) und Bis(2-Chlor-Phenyl)-Diketopyrrolopyrrol (111) eine rubinrote Coloristik sowie eine hohe Farbtonreinheit und Brillanz aufweist.

Die vorliegende Erfindung betrifft einen Mischkristall aus Verbindungen der Formel (I), (II) und (III), 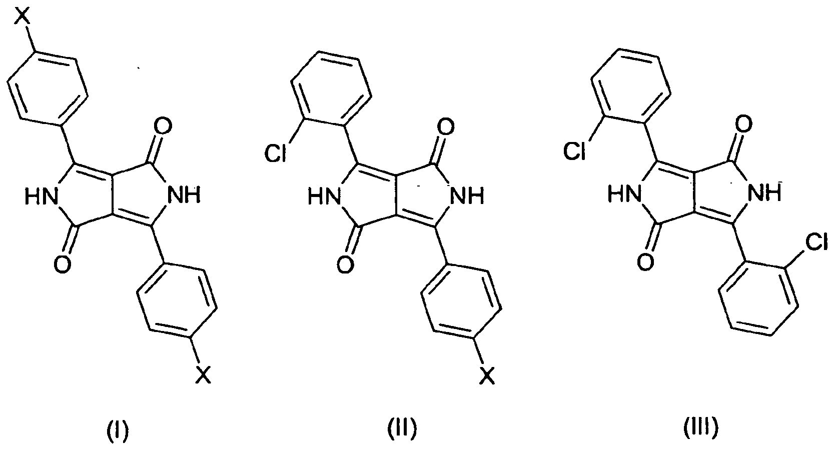 erhältlich durch Umsetzung von 1 Mol eines Bernsteinsäurediesters mit 2 Mol einer Mischung von Nitrilen A-CN und B-CN, wobei im Nitrilgemisch A-CN und B-CN im Molverhältnis 90 zu 10 bis 30 zu 70, bevorzugt 80 zu 20 bis 40 zu 60, insbesondere 75 zu 25 bis 50 zu 50, zueinander stehen, und wobei A-CN 2-Chlorbenzonitril bedeutet und B-CN 4-X-Benzonitril mit X = Chlor, Methyl oder Nitril ist.
Vorzugsweise hat X die Bedeutung Chlor.

Weiterhin wurde gefunden, dass die erfindungsgemäßen Mischkristalle überraschenderweise in einer bisher nicht bekannten Kristallmodifikation vorliegen.

Unter Mischkristallen werden im Sinne der vorliegenden Erfindung auch "feste Lösungen" oder "solid solutions" verstanden. Die Eigenschaften der Mischkristalle unterscheiden sich sowohl von den Eigenschaften der Einzelkomponenten, als auch von den Eigenschaften der physikalischen Mischungen der Einzelkomponenten. Insbesondere unterscheiden sich die Röntgenpulverdiagramme der Mischkristalle von denen der entsprechenden physikalischen Mischungen und von der Summe der Pulverdiagramme der Einzelverbindungen.

Die erfindungsgemäße Kristallmodifikation ist durch nachstehende Hauptreflexe (Intensitäten: s = stark und m = mittel) im Röntgenpulverdiagramm gekennzeichnet (Cu-K_{α}-Strahlung, 2 Theta-Werte in Grad, Meßgenauigkeit +/- 0,2°)

| 2 Theta: | relative Intensität: |
|---|---|
| 5,9 | s |
| 13,4 | m |
| 15,8 | m |
| 25,5 | m |
| 26,5 | m |

Gegenstand der vorliegenden Erfindung ist auch ein Verfahren zur Herstellung der erfindungsgemäßen Mischkristalle durch Umsetzung von Bemsteinsäurediestem mit 2-Chlor- und 4-X-Benzonitril in den vorstehend angegebenen Mengenverhältnissen, in einem organischen Lösemittel, in Gegenwart einer starken Base und bei erhöhter Temperatur unter Bildung eines Pigmentalkalisalzes, anschließender Hydrolyse des Pigmentalkalisalzes in Wasser und/oder Alkohol und gegebenenfalls anschließendem Lösemittelfinish.

Die Gesamtkonzentration der Nitrile im organischen Lösemittel beträgt zweckmäßigerweise 0,5 bis 5 mol/l.
Das molare Verhältnis der starken Base zum Bemsteinsäurediester beträgt zweckmäßigerweise 0,1 bis 10 Mol Base auf 1 Mol Bemsteinsäurediester.
Die Reaktionstemperatur für die Bildung des Pigmentalkalisalzes beträgt zweckmäßigerweise 60 bis 140 °C, bevorzugt 80 bis 120 °C.

Bei den zu verwendenden Bemsteinsäurediestem kann es sich um Dialkyl-, Diaryl- oder Monoalkylmonoarylester handeln, wobei auch die Bernsteinsäuredialkylester und -diarylester unsymmetrisch sein können. Bevorzugt werden symmetrische Bernsteinsäurediester, insbesondere symmetrische Bernsteinsäuredialkylester, verwendet. Liegt ein Bernsteinsäurediarylester oder -monoaryl-monoalkylester vor, so bedeutet Aryl insbesondere unsubstituiertes oder durch 1, 2 oder 3 Substituenten aus der Gruppe Halogen, wie Chlor, C₁-C₆-Alkyl, wie Methyl, Ethyl, Isopropyl, tert.-Butyl oder tert.-Amyl, oder C₁-C₆-Alkoxy, wie Methoxy oder Ethoxy, substituiertes Phenyl. Aryl bedeutet bevorzugt unsubstituiertes Phenyl. Handelt es sich um einen Bernsteinsäuredialkylester oder -monoalkyl-monoarylester, so kann Alkyl unverzweigt, verzweigt oder cyclisch sein, bevorzugt verzweigt, und vorzugsweise 1 bis 18, insbesondere 1 bis 12, vor allem 1 bis 8 und besonders bevorzugt 1 bis 5 C-Atome enthalten. Alkyl ist bevorzugt sek.- oder tert.-Alkyl, wie z. B. Isopropyl, sek.-Butyl, tert.-Butyl, tert.-Amyl, Cyclohexyl, Heptyl, 2,2-Dimethylhexyl, Octyl, Decyl, Dodecyl, Tetradecyl oder Octadecyl.
Beispiele für Bernsteinsäurediester sind Bernsteinsäure-dimethylester, -diethylester, -dipropylester, -dibutylester, -dipentylester, -dihexylester, -diheptylester, -dioctylester, -diisopropylester, -di-sec.-butylester, -di-tert.-butylester, -di-tert.-amylester, -di-[1,1-dimethylbutyl]-ester, -di-[1,1,3,3-tetramethylbutyl]-ester, -di-[1,1-dimethylpentyl]-ester, -di-[1-methyl-1-ethyl-butyl]-ester, -di-[1,1-diethylpropyl]-ester, -diphenylester, -di-[4-methylphenyl]-ester, -di-[2-methylphenyl]-ester, -di-[4-chlorphenyl]-ester, -di-[2,4-dichlorphenyl]-ester, -monoethylmonophenylester, -dicyclohexylester.
Insbesondere werden symmetrische Bernsteinsäuredialkylester verwendet, worin Alkyl verzweigt ist und 3 bis 5 C-Atome enthält.
Die Umsetzung des Bemsteinsäurediesters mit dem Nitril wird in einem organischen Lösemittel durchgeführt. Als Lösemittel eignen sich beispielsweise primäre, sekundäre oder tertiäre Alkohole mit 1 bis 10 C-Atomen, wie Methanol, Ethanol, n-Propanol, Isopropanol, n-Butanol, sek.-Butanol, tert.-Butanol, Pentanole, wie n-Pentanol oder 2-Methyl-2-butanol, Hexanole, wie 2-Methyl-2-pentanol oder 3-Methyl-3-pentanol, 2-Methyl-2-hexanol, 3-Ethyl-3-pentanol, Octanole, wie 2,4,4-Trimethyl-2-pentanol, Cyclohexanol, oder Glykole, wie Ethylenglykol, Diethylenglykol, Propylenglykol, Dipropylenglykol oder Glycerin, oder Polyglykole, wie Polyethylenglykole oder Polypropylenglykole, Ether, wie Methylisobutylether, Tetrahydrofuran, Dimethoxyethan oder Dioxan, Glykolether, wie Monomethyl- oder Monoethylether des Ethylen- oder Propylenglykols, Diethylenglykol-monomethylether oder Diethylenglykol-monoethylether, Butylglykole oder Methoxybutanol, dipolar-aprotische Lösemittel, beispielsweise Säureamide wie Dimethylformamid, N,N-Dimethylacetamid oder N-Methylpyrrolidon, Harnstoffderivate wie Tetramethylharnstoff, aliphatische oder aromatische Kohlenwasserstoffe, wie Cyclohexan oder Benzol oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol oder 1,2,4-Trichlorbenzol, aromatische N-Heterocyclen, wie Pyridin, Picolin oder Chinolin, sowie Hexamethylphosphorsäuretriamid, 1,3-Dimethyl-2-imidazolidinon, Dimethylsulfoxid oder Sulfolan.

Die Herstellung des Pigmentalkalisalzes erfolgt in Gegenwart einer starken Base. Geeignete starke Basen sind insbesondere die Alkalimetalle selbst, wie Lithium, Natrium oder Kalium, oder Alkaliamide, wie Lithium-, Natrium- oder Kaliumamid, oder Alkalihydride, wie Lithium-, Natrium- oder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z. B. Lithium-, Natrium- oder Kaliummethylat, -ethylat, -n-propylat, -isopropylat, n-butylat, -sek.-butylat, -tert.-butylat, -2-methyl-2-butylat, -2-methyl-2-pentylat, -3-methyl-3-pentylat, -3-ethyl-3-pentylat. Auch Gemische der genannten Basen können verwendet werden.
Bevorzugt sind Alkalialkoholate, wobei Alkali insbesondere Natrium oder Kalium bedeutet, und das Alkoholat sich bevorzugt von einem sekundären oder tertiären Alkohol ableitet. Besonders bevorzugte starke Basen sind daher z. B. Natrium- oder Kalium-isopropylat, -sek.-butylat, -tert.-butylat und -tert.-amylat. Dabei können die Alkalialkoholate auch in situ hergestellt werden, indem der entsprechende Alkohol mit dem Alkalimetall, Alkalihydrid oder Alkaliamid umsetzt wird.

Zur Hydrolyse des Pigmentalkalisalzes können als Hydrolysemittel Wasser oder ein oder mehrere organische, protische Lösemittel verwendet werden. Als protische Lösemittel kommen z. B. Alkohole, vorzugsweise mit 1 bis 4 C-Atomen, wie Methanol oder Ethanol, in Betracht. Es können auch Wasser und Alkohol in beliebigen Kombinationen verwendet werden. Die Hydrolyse kann auch in Gegenwart von organischen aprotischen Lösemitteln durchgeführt werden.
Die Hydrolyse kann direkt durch Zugabe eines Hydrolysemittels zur Reaktionssuspension, oder indirekt, durch Zugabe der Reaktionssuspension zum Hydrolysemittel, geschehen. Die Hydrolysemittel Wasser sowie organisches protisches Lösemittel können in beliebiger Reihenfolge und auch als Mischungen zugegeben und/oder vorgelegt werden. Auch eine gleichzeitige Zugabe einzelner Komponenten zu einer Vorlage ist möglich.
Es kann von Vorteil sein, einen Puffer während der Hydrolyse zu verwenden, wie beispielsweise einen Phosphat-, Acetat-, Citronensäure- oder Triethanolamin-Puffer.
Die Temperatur bei der Hydrolyse kann -20°C bis 200°C betragen, bevorzugt -5 bis 180 °C, insbesondere 0 bis 160 °C, gegebenenfalls findet die Hydrolyse unter Druck statt. Dabei können Reaktionssuspension und Hydrolysemittel auch unterschiedliche Temperatur haben. Beispielsweise kann die Hydrolyse auch mittels Wasserdampf geschehen.
Die Gesamtmenge an Hydrolysemittel beträgt zweckmäßigerweise eine mindestens stöchiometrische Menge bezogen auf Base. Beispielsweise kann Wasser und/oder ein organisches, protisches Lösemittel zwischen 0,5 und 50 Gew.-Teilen auf 1 Teil des entstandenen Pigments eingesetzt werden.

Die erfindungsgemäßen Mischkristalle können anschließend auch gefinisht werden, ohne dass sich die Kristallmodifikation ändert. In Abhängigkeit von den Finish-Bedingungen können die feinteiligen Partikel wieder wachsen, so dass je nach gewünschtem Anwendungsgebiet die Finishbedingungen entsprechend anzupassen sind. Die Finishbedingungen, die zu mehr opaken Teilchen führen, sind dem Fachmann bekannt und beispielsweise in der WO 02/085 987 beschrieben.
Finishbedingungen, die die erzielte Feinteiligkeit weitgehend erhalten, sind beispielsweise in der EP-A-0 640 603 beschrieben.

Vorzugsweise verfährt man so, dass die bei der Hydrolyse des Pigmentalkalisalzes erhaltene Pigmentsuspension für 0,1 bis 8 Stunden, insbesondere 0,5 bis 6 Stunden, auf eine Temperatur von 50 bis 150 °C, insbesondere 80 bis 130 °C, gegebenenfalls unter Druck, erhitzt wird. Vorteilhaft kann auch die Gegenwart von oberflächenaktiven Mitteln sein, die das Kristallwachstum inhibieren.

Zur Erleichterung der Mischkristallbildung, zur Stabilisierung der Mischkristalle, zur Inhibierung des Kristallwachstums, zur Verbesserung der coloristischen Eigenschaften und/oder zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden, sofern diese die erfindungsgemäßen Vorteile nicht beeinträchtigen. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muss zuvor durch orientierende Versuche ermittelt werden.

Es ist auch möglich, einen oder mehrere der genannten Verfahrensschritte zur Herstellung der erfindungsgemäßen Pigmentzusammensetzungen in einem Mikroreaktor durchzuführen, wie z. B. in EP-A-1 257 602 beschrieben.

Die erfindungsgemäßen Mischkristalle lassen sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacke, Anstrichfarben, Druckfarben, elektrophotographischen Tonern und Entwicklern, Elektretmaterialien, Farbfiltern sowie von Tinten, insbesondere Ink-Jet-Tinten.

Hochmolekulare organische Materialien, die mit den erfindungsgemäßen Mischkristallen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren-Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Mischkristalle als Blend oder in Form von Präparationen oder Dispersionen zu benutzen.

Bezogen auf das zu pigmentierende, hochmolekulare organische Material setzt man die erfindungsgemäßen Mischkristalle meist in einer Menge von 0,01 bis 30 Gew.-%, vorzugsweise 0,1 bis 20 Gew.%, ein. Bei dem Einsatz in Farbfiltern können auch höhere Mengen eingesetzt werden, wie nachstehend erwähnt.

Die erfindungsgemäßen Mischkristalle sind auch geeignet als Farbmittel in elektrophotographischen Tonern und Entwicklern, wie beispielsweise Ein- oder Zweikomponentenpulvertonem (auch Ein- oder Zweikomponenten-Entwickler genannt), Magnettoner, Flüssigtoner, Polymerisationstoner sowie Spezialtoner. Außerdem sind die erfindungsgemäßen Mischkristalle als Farbmittel in Ink-Jet Tinten auf wässriger und nichtwässriger Basis sowie in solchen Tinten, die nach dem Hot-melt-Verfahren arbeiten, geeignet.

Insbesondere sind die erfindungsgemäßen Pigmentzusammensetzungen als Farbmittel für Farbfilter sowohl für die additive wie auch für die subtraktive Farberzeugung geeignet, wie beispielsweise in elektro-optischen Systemen wie Fernsehbildschirmen, LCD (liquid crystal displays), charge coupled devices, plasma-displays oder electroluminescent displays, die wiederum aktive (twisted nematic) oder passive (supertwisted nematic) ferroelectric displays oder lightemitting diodes sein können, sowie als Farbmittel für elektronische Tinten ("electronic inks" bzw. "e-inks") oder "electronic paper" ("e-paper").

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z. B. TFT-LCD = Thin Film Transistor Liquid Crystal Displays oder z. B. ((S) TN-LCD = (Super) Twisted Nematic-LCD) aufgebracht. Neben einer hohen Thermostabilität ist für eine stabile Paste bzw. einen pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die Rotfarbtöne der erfindungsgemäßen Pigmentzusammensetzungen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.
Typische Farbmittel für den blauen Farbpunkt sind Phthalocyaninfarbmittel oder Benzimidazolondioxazinpigmente wie z. B. C.I. Pigment Blue 15:6 und
C.I. Pigment Blue 80. Für den grünen Farbpunkt werden typischerweise Phthalocyaninfarbmittel eingesetzt, wie z. B. C.I. Pigment Green 36 und C.I. Pigment Green 7.

Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit C.I. Pigment Yellow 138,139,150,151,180 und 213. Für den Blau Farbton wird bevorzugt mit Violet abgemischt, z. B. mit C.I. Pigment Violet 19 oder 23.

Die Einsatzkonzentration der erfindungsgemäßen Pigmentzusammensetzungen im aufgebrachten Color Filter-Film kann zwischen 5 und 95 Gew.-%, bevorzugt zwischen 20 und 80 Gew.-%, ganz besonders bevorzugt zwischen 40 und 60 Gew.%, liegen, bezogen auf das Gesamtgewicht des Color Filter-Filmes. Gegenstand der Erfindung ist auch ein Colorfilter, enthaltend eine färberisch wirksame Menge der erfindungsgemäßen Pigmentzusammensetzung.

Schließlich ist es auch möglich, das erfindungsgemäße Mischkristall-Pigment durch trockenes Mischen mit organischen oder anorganischen Massen, Granulaten, Faserstoffen, Pulvern und anderen Pigmenten zu Stoffmischungen zu verarbeiten.

In den folgenden Beispielen bedeuten Prozentangaben Gewichtsprozente und Teile Gewichtsteile, sofern nicht anders angegeben. Molprozente beziehen auf den Gesamt-Nitrilanteil. Die Röntgenpulverdiagramme wurden mit Cu-K_{α}-Strahlung gemessen, 2 Theta-Werte in Grad, Meßgenauigkeit +/- 0,2°, für die Intensitäten bedeuten: vs = sehr stark, s = stark, m = mittel, w = schwach.

### Vergleichsbeispiel 1 (100 % 4-Chlorbenzonitril):

31 Teile 4-Chlorbenzonitril werden in 30 %iges Natriumamylat (hergestellt aus 9,3 Teilen Natrium und 143 Teilen Amylalkohol) eingetragen und auf 100 °C erwärmt. 30 Teile Bernsteinsäurediisopropylester werden innerhalb zwei Stunden zugegeben. Nach weiteren vier Stunden bei 100 °C wird die Pigmentalkalisalz-Suspension auf 80 °C abgekühlt und auf 60 °C heißes Wasser gegeben. Die Pigmentsuspension wird zur Konditionierung anschließend fünf Stunden auf 95 °C erhitzt, abfiltriert, mit Methanol und Wasser gewaschen und im Trockenschrank bei 75 °C getrocknet. Man erhält ein gelbstichig-rotes Pigment, welches sich im Röntgenpulverdiagramm durch folgende charakteristische Linien auszeichnet:

| 2 Theta: | relative Intensität: |
|---|---|
| 7,6 | m |
| 15,3 | m |
| 20,6 | w |
| 24,6 | m |
| 25,8 | m |
| 26,9 | w |
| 28,3 | s |
| 31,1 | m |
| 32,1 | m |
| 33,0 | w |

### Vergleichsbeispiel 2 (100 % 2-Chlorbenzonitril):

Es wird ein Pigment analog dem im Vergleichsbeispiel 1 beschriebenen Verfahren hergestellt, wobei jedoch 2-Chlorbenzonitril an Stelle von 4-Chlorbenzonitril verwendet wird.
Man erhält ein oranges Pigment, welches sich im Röntgenpulverdiagramm durch folgende charakteristische Linien auszeichnet:

| 2 Theta: | relative Intensität: |
|---|---|
| 6,6 | s |
| 8,0 | m |

| 2 Theta: | relative Intensität: |
|---|---|
| 12,7 | m |
| 13,2 | w |
| 13,7 | w |
| 14,2 | m |
| 14,5 | m |
| 16,0 | w |
| 17,1 | m |
| 17,5 | w |
| 18,0 | w |
| 18,3 | w |
| 19,4 | m |
| 20,0 | w |
| 20,6 | s |
| 20,8 | m |
| 23,0 | w |
| 23,6 | w |
| 24,2 | m |
| 24,9 | s |
| 26,4 | w |
| 27,2 | w |
| 27,5 | w |
| 29,7 | m |

| 2 Theta: | relative Intensität: |
|---|---|
| 31,0 | w |
| 32,5 | w |
| 32,9 | w |

### Beispiel 1 (Mischkristall aus 75 Mol-% 2-Chlorbenzonitril, 25 Mol% 4-Chlorbenzonitril):

Das Pigment wird analog Vergleichsbeispiel 1 hergestellt, wobei aber 23,25 Teile 2-Chlorbenzonitril und 7,75 Teile 4-Chlorbenzonitril umgesetzt werden.
Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 5,9 | s |
| 8,0 | w |
| 12,7 | w |
| 13,3 | m |
| 14,2 | w |
| 14,5 | w |
| 15,7 | w |
| 17,0 | w |
| 18,0 | w |
| 19,4 | w |

| 2 Theta: | relative Intensität: |
|---|---|
| 19,9 | w |
| 20,6 | m |
| 23,5 | w |
| 24,2 | m |
| 25,0 | m |
| 25,5 | m |
| 26,4 | s |
| 29,6 | w |

### Beispiel 2 (Mischkristall aus 80 Mol-% 2-Chlorbenzonitril, 20 Mol-% 4-Chlorbenzonitril):

Das Pigment wird analog Vergleichsbeispiel 1 hergestellt, wobei aber 24,8 Teile 2-Chlorbenzonitril und 6,2 Teile 4-Chlorbenzonitril umgesetzt werden.
Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 6,0 | s |
| 8,0 | w |
| 12,7 | w |
| 13,3 | m |
| 14,2 | w |

| 2 Theta: | relative Intensität: |
|---|---|
| 14,5 | w |
| 15,8 | m |
| 17,1 | w |
| 18,1 | w |
| 19,4 | w |
| 20,1 | w |
| 20,6 | m |
| 23,6 | w |
| 24,2 | w |
| 24,9 | m |
| 25,6 | m |
| 26,4 | m |
| 29,6 | w |

### Beispiel 3 (Mischkristall aus 70 Mol-% 2-Chlorbenzonitril, 30 Mol-% 4-Chlorbenzonitril):

Das Pigment wird analog Vergleichsbeispiel 1 hergestellt, wobei aber 21,7 Teile 2-Chlorbenzonitril und 9,3 Teile 4-Chlorbenzonitril umgesetzt werden.
Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 5,9 | s |
| 7,9 | w |
| 12,7 | w |
| 13,3 | m |
| 14,2 | w |
| 14,5 | w |
| 15,8 | m |
| 17,0 | w |
| 17,9 | w |
| 19,8 | w |
| 20,6 | w |
| 24,2 | w |
| 25,0 | w |
| 25,6 | m |
| 26,4 | s |
| 28,9 | w |
| 29,6 | w |

### Beispiel 4 (Mischkristall aus 50 Mol-% 2-Chlorbenzonitril, 50 Mol% 4-Chlorbenzonitril):

Das Pigment wird analog Vergleichsbeispiel 1 hergestellt, wobei aber 15,5 Teile 2-Chlorbenzonitril und 15,5 Teile 4-Chlorbenzonitril umgesetzt werden.

Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 5,9 | s |
| 7,9 | w |
| 12,7 | w |
| 13,3 | m |
| 14,2 | w |
| 14,5 | w |
| 15,8 | m |
| 17,0 | w |
| 18,0 | w |
| 20,6 | w |
| 24,9 | m |
| 25,5 | m |
| 26,5 | s |
| 29,6 | w |

### Beispiel 5 (Mischkristall aus 70 Mol-% 2-Chlorbenzonitril, 30 Mol-% 4-Methylbenzonitril):

Das Pigment wird analog Vergleichsbeispiel 1 hergestellt, wobei aber 21,7 Teile 2-Chlorbenzonitril und 7,9 Teile 4-Methylbenzonitril umgesetzt werden.

Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 5,8 | s |
| 12,7 | m |
| 13,6 | m |
| 14,1 | m |
| 14,6 | m |
| 15,9 | m |
| 20,7 | m |
| 23,5 | w |
| 24,1 | w |
| 24,9 | w |
| 25,4 | m |
| 26,6 | m |

### Beispiel 6 (Mischkristall aus 70 Mol-% 2-Chlorbenzonitril, 30 Mol-% 4-Cyanobenzonitril):

Das Pigment wird analog Vergleichsbeispiel 1 hergestellt, wobei aber 21,7 Teile 2-Chlorbenzonitril und 8,6 Teile 4-Cyanobenzonitril umgesetzt werden.
Nach Isolierung und Wäsche mit Methanol und Wasser erhält man ein rubinfarbenes Pigment. Es zeichnet sich im Röntgenpulverdiagramm durch folgende charakteristische Linien aus:

| 2 Theta: | relative Intensität: |
|---|---|
| 6,1 | s |
| 12,7 | m |
| 13,6 | m |
| 14,0 | m |
| 14,6 | m |
| 16,0 | w |
| 20,2 | w |
| 20,6 | w |
| 24,2 | w |
| 25,0 | m |
| 25,4 | m |
| 26,4 | m |

## Patentansprüche

1. Mischkristall aus Verbindungen der Formel (I), (II) und (III), 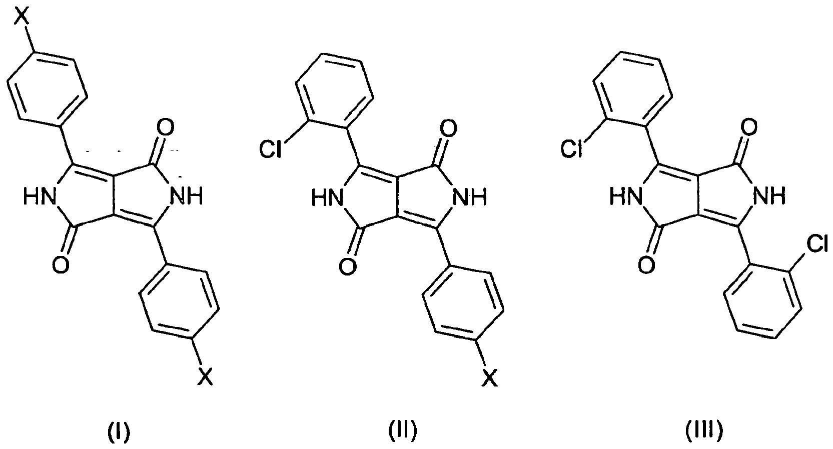 erhältlich durch Umsetzung von 1 Mol eines Bernsteinsäurediesters mit 2 Mol einer Mischung von Nitrilen A-CN und B-CN, wobei im Nitrilgemisch A-CN und B-CN im Molverhältnis 90 zu 10 bis 30 zu 70 zueinander stehen, und wobei A-CN 2-Chlorbenzonitril bedeutet und B-CN 4-X-Benzonitril mit X = Chlor, Methyl oder Nitril ist.

2. Mischkristall nach Anspruch 1, erhältlich durch Umsetzung von 1 Mol eines Bemsteinsäurediesters mit 2 Mol einer Mischung von Nitrilen A-CN und B-CN, wobei im Nitrilgemisch A-CN und B-CN im Molverhältnis 80 zu 20 bis 40 zu 60 zueinander stehen.

3. Mischkristall nach Anspruch 1 oder 2, erhältlich durch Umsetzung von 1 Mol eines Bemsteinsäurediesters mit 2 Mol einer Mischung von Nitrilen A-CN und B-CN, wobei im Nitrilgemisch A-CN und B-CN im Molverhältnis 75 zu 25 bis 50 zu 50 zueinander stehen.

4. Mischkristall nach einem oder mehreren der Ansprüche 1 bis 3, **dadurch gekennzeichnet, dass** X gleich Chlor bedeutet.

5. Mischkristall nach einem oder mehreren der Ansprüche 1 bis 4, **gekennzeichnet durch** die Hauptreflexe im Röntgenpulverdiagramm (Cu-K_{α}-Strahlung, 2 Theta-Werte in Grad, Meßgenauigkeit +/- 0,2°, Intensitäten: s = stark, m = mittel):
| 2 Theta: | relative Intensität: |
|---|---|
| 5,9 | s |
| 13,4 | m |
| 15,8 | m |
| 25,5 | m |
| 26,5 | m |

6. Verfahren zur Herstellung eines Mischkristalls nach einem oder mehreren der Ansprüche 1 bis 5 durch Umsetzung von 1 Mol eines Bemsteinsäurediesters mit 2 Mol einer Mischung von Nitrilen A-CN und B-CN, wobei im Nitrilgemisch A-CN und B-CN im Molverhältnis 90 zu 10 bis 30 zu 70 zueinander stehen, in einem organischen Lösemittel, in Gegenwart einer starken Base und bei erhöhter Temperatur unter Bildung eines Pigmentalkalisalzes, anschließender Hydrolyse des Pigmentalkalisalzes in Wasser und/oder Alkohol und gegebenenfalls anschließendem Lösemittelfinish.

7. Verwendung eines Mischkristalls nach einem oder mehreren der Ansprüche 1 bis 5 zum Pigmentieren von hochmolekularen organischen Materialien natürlicher oder synthetischer Herkunft.

8. Verwendung nach Anspruch 7 zum Pigmentieren von Kunststoffen, Harzen, Lacken, Anstrichfarben, Druckfarben, elektrophotographischen Tonern und Entwicklern, Farbfiltern sowie von Tinten.

9. Verwendung nach Anspruch 7 oder 8 zum Pigmentieren von Farbfiltern, Metallic-Lacken und Ink-Jet-Tinten.

## Claims

1. A mixed crystal comprising compounds of formula (I), (II) and (III), 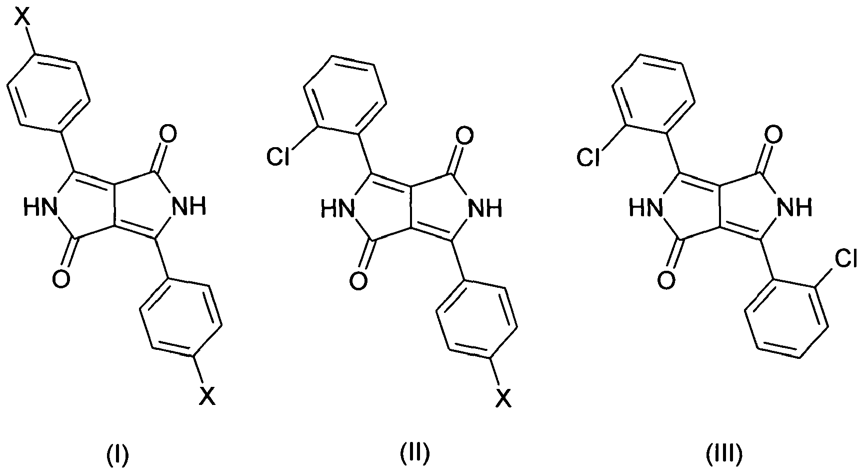 obtainable by reacting 1 mol of a succinic diester with 2 mol of a mixture of nitriles A-CN and B-CN, in a molar ratio of 90:10 to 30:70 between the A-CN and B-CN in the nitrile mixture, A-CN being 2-chlorobenzonitrile and B-CN being 4-X-benzonitrile where X = chlorine, methyl or nitrile.

2. The mixed crystal as claimed in claim 1, obtainable by reacting 1 mol of a succinic diester with 2 mol of a mixture of nitriles A-CN and B-CN in a molar ratio of 80:20 to 40:60 between the A-CN and B-CN in the nitrile mixture.

3. The mixed crystal as claimed in claim 1 or 2, obtainable by reacting 1 mol of a succinic diester with 2 mol of a mixture of nitriles A-CN and B-CN in a molar ratio of 75:25 to 50:50 between the A-CN and B-CN in the nitrile mixture.

4. The mixed crystal as claimed in one or more of claims 1 to 3, wherein X is chlorine.

5. The mixed crystal as claimed in one or more of claims 1 to 4, **characterized by** the main signals in the x-ray powder diagram (Cu-K_{α} radiation, 2 theta values in degrees, measuring accuracy +/- 0.2°, intensities: s = strong, m = medium):
| 2 theta: | relative intensity: |
|---|---|
| 5.9 | s |
| 13.4 | m |
| 15.8 | m |
| 25.5 | m |
| 26.5 | m |

6. A process for preparing a mixed crystal as claimed in one or more of claims 1 to 5, which comprises reacting 1 mol of a succinic diester with 2 mol of a mixture of nitriles A-CN and B-CN in a molar ratio of 90:10 to 30:70 between the A-CN and B-CN in the nitrile mixture, in an organic solvent, in the presence of a strong base and at elevated temperature to form a pigment alkali salt, subsequent hydrolysis of the pigment alkali salt in water and/or alcohol and optionally subsequent solvent finishing.

7. The use of a mixed crystal as claimed in one or more of claims 1 to 5 for pigmenting macromolecular organic materials of natural or synthetic origin.

8. The use as claimed in claim 7 for pigmenting plastics, resins, coatings, paints, printing inks, electrophotographic toners and developers, color filters and also liquid inks.

9. The use as claimed in claim 7 or 8 for pigmenting color filters, metallic coatings and inkjet inks.

## Revendications

1. Cristal mixte de composés des formules (I), (II) et (III), 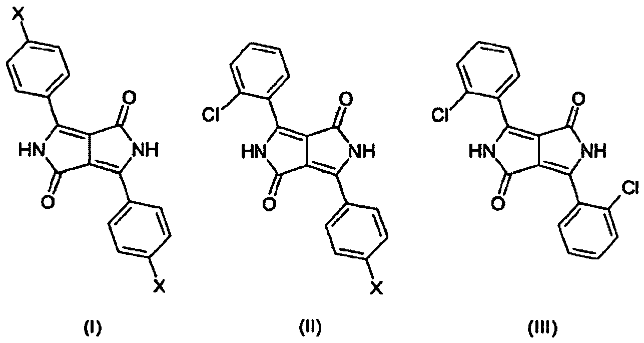 pouvant être obtenu par transformation de 1 mole d'un diester de l'acide succinique avec 2 moles d'un mélange de nitriles A-CN et B-CN, où A-CN et B-CN se trouvent, dans le mélange de nitriles, dans un rapport molaire de 90:10 à 30:70, et où A-CN signifie 2-chlorobenzonitrile et B-CN signifie 4-X-benzonitrile avec X = chlore, méthyle ou nitrile.

2. Cristal mixte selon la revendication 1, pouvant être obtenu par transformation de 1 mole d'un diester de l'acide succinique avec 2 moles d'un mélange de nitriles A-CN et B-CN, où A-CN et B-CN se trouvent, dans le mélange de nitriles, dans un rapport molaire de 80:20 à 40:60.

3. Cristal mixte selon la revendication 1 ou 2, pouvant être obtenu par transformation de 1 mole d'un diester de l'acide succinique avec 2 moles d'un mélange de nitriles A-CN et B-CN, où A-CN et B-CN se trouvent, dans le mélange de nitriles, dans un rapport molaire de 75:25 à 50:50.

4. Cristal mixte selon l'une ou plusieurs des revendications 1 à 3, **caractérisé en ce que** X signifie chlore.

5. Cristal mixte selon l'une ou plusieurs des revendications 1 à 4, **caractérisé par** les réflexions principales dans le diagramme de diffraction de rayons X sur des poudres (rayonnement Cu-K_{α}, valeurs 2 Thêta en degrés, précision de mesure ± 0,2°, intensités : s = forte, m = moyenne) :
| 2 Thêta : | Intensité relative |
|---|---|
| 5,9 | s |
| 13,4 | m |
| 15,8 | m |
| 25,5 | m |
| 26,5 | m |

6. Procédé de préparation d'un cristal mixte selon l'une ou plusieurs des revendications 1 à 5 par transformation de 1 mole d'un diester de l'acide succinique avec 2 moles d'un mélange de nitriles A-CN et B-CN, où, dans le mélange de nitriles, A-CN et B-CN se trouvent dans un rapport molaire de 90:10 à 30:70 l'un par rapport à l'autre, dans un solvant organique, en présence d'une base forte et à température augmentée, avec formation d'un sel alcalin d'un pigment, hydrolyse consécutive du sel alcalin d'un pigment dans l'eau et/ou un alcool et le cas échéant finition consécutive par un solvant.

7. Utilisation d'un cristal mixte selon l'une ou plusieurs des revendications 1 à 5 pour pigmenter des matériaux organiques de haut poids moléculaire d'origine naturelle ou synthétique.

8. Utilisation selon la revendication 7 pour la pigmentation de matériaux synthétiques, de résines, de laques, de peintures, d'encre d'imprimerie, de toners et d'agents de développement électrophotographiques ainsi que d'encres.

9. Utilisation selon la revendication 7 ou 8 pour la pigmentation de filtres couleur, de laques métallisées et d'encres pour imprimantes à jet d'encre.
